# EUROPÄISCHE PATENTSCHRIFT

(11) **EP 1 654 473 B1**
(45) Veröffentlichungstag und Bekanntmachung des Hinweises auf die Patenterteilung: **28.12.2011**
(21) Anmeldenummer: 04727568.0
(22) Anmeldetag: 15.04.2004
(51) Int. Cl.: F16D 65/04, F16D 69/00, F16D 66/02

(54) **KRAFTFAHRZEUGBREMSE**
MOTOR VEHICLE BRAKE SYSTEM
FREIN POUR VEHICULE

(30) Priorität: 06.08.2003 DE 10335926; 21.10.2003 DE 10348829
(43) Veröffentlichungstag der Anmeldung: 10.05.2006
(73) Patentinhaber: Continental Teves AG & Co. oHG, 60488 Frankfurt am Main (DE)
(72) Erfinder: THIESING, Jochen, 55252 Mainz-Kastel (DE); SCHIRLING, Andreas, 64319 Pfungstadt (DE)
(86) Internationale Anmeldenummer: PCT/EP2004/050530
(87) Internationale Veröffentlichungsnummer: WO 2005/015045

(56) Entgegenhaltungen:
- US-A- 2 117 027
- US-A- 3 415 115
- US-B1- 6 260 665
- PATENT ABSTRACTS OF JAPAN Bd. 1998, Nr. 05, 30. April 1998 (1998-04-30) & JP 10 009307 A (TOYOTA MOTOR CORP), 13. Januar 1998 (1998-01-13)

## Beschreibung

Die Erfindung betrifft eine Kraftfahrzeugbremse mit mindestens einer Bremsscheibe oder mindestens einer Bremstrommel, mit mindestens zwei Bremsbelägen sowie mit einer Einrichtung zum Ermitteln einer bei der Betätigung der Kraftfahrzeugbremse auf die Bremsbeläge einwirkenden Spannkraft, wobei die Bremsbeläge eine Trägerplatte sowie eine mit der Bremsscheibe oder der Bremstrommel in Eingriff bringbare Reibschicht aufweisen.

Die Ermittlung der Spannkraft oder einer die Spannkraft repräsentierenden Größe ist insbesondere bei elektronisch regelbaren Bremssystemen sehr wichtig. Bei konventionellen hydraulischen oder elektrohydraulischen Bremssystemen werden zu diesem Zweck den einzelnen Radbremsen zugeordnete Drucksensoren verwendet, die die in den Radbremsen eingesteuerten Drücke erfassen und aus deren Ausgangssignalen die gewünschten Spannkraftwerte abgeleitet werden können.

Die Ermittlung der Spannkraft bei elektromechanischen Bremssystemen erfolgt üblicherweise mittels Spannkraftsensoren, die in den Aktuatoren integriert sind. So ist beispielsweise aus der EP 1 242 797 B1 ein aktorintegrierter Kraftsensor bekannt, der die Verformung bzw. Durchbiegung eines Auflageringes erfasst, der am Boden eines Betätigungselementes anliegt, das mit einem der Bremsbeläge kraftübertragend zusammenwirkt. Aus der EP 0 849 576 B1 ist ein kapazitiver Kraftsensor bekannt, der zwischen einem die Zuspannkraft auf einen der Bremsbeläge übertragenden Kolben und einem Ende einer Spindel angeordnet ist, die von einem Elektromotor angetrieben wird und die die erforderliche Zuspannkraft aufbringt. Als nachteilig anzusehen sind jedoch die verhältnismäßig hohen Kosten, die zwangsläufig mit der Verwendung der genannten Kraftsensorik verbunden sind.

Es ist daher Aufgabe der vorliegenden Erfindung, eine Kraftfahrzeugbremse der eingangs genannten Gattung vorzuschlagen, bei der die Zuspannkraftmessungen mit ausreichend hoher Messgenauigkeit mit niedrigem Kostenaufwand durchgeführt werden können.

Eine erste erfindungsgemäße Lösung der Aufgabe besteht darin, dass die Einrichtung zum Ermitteln der Spannkraft derart ausgebildet ist, dass sie bei der Betätigung der Kraftfahrzeugbremse auftretende Änderungen des elektrischen Widerstandes der Reibschicht erfasst und zur Bestimmung der Spannkraft auswertet.

Eine zweite erfindungsgemäße Lösung der Aufgabe, die insbesondere bei Bremssystemen verwendet werden kann, deren Bremsbeläge eine zwischen Trägerplatte und Reibschicht angeordnete Verbindungsschicht aufweisen, besteht darin, dass die Einrichtung zum Ermitteln der Spannkraft derart ausgebildet ist, dass sie bei der Betätigung der Kraftfahrzeugbremse auftretende Änderungen des elektrischen Widerstandes der Verbindungsschicht erfasst und zur Bestimmung der Spannkraft auswertet.

Eine vorteilhafte Weiterbildung der ersten sowie der zweiten Lösung sieht vor, dass die ermittelten Widerstandswerte mit einem gemessenen bzw. errechneten Temperaturwert abgeglichen werden, der von einem temperaturmessenden Element zur Ermittlung der Temperatur der Reibschicht oder der Verbindungsschicht geliefert wird. Dabei ist es besonders vorteilhaft, wenn die Reibschicht oder die Verbindungsschicht an eine elektrische Aufbereitungsschaltung angeschlossen ist, deren Ausgangssignal zusammen mit dem den Temperaturwert repräsentierenden Ausgangssignal zur Auswertung einem Mikroprozessor zugeführt wird.

Eine andere vorteilhafte Ausführung des Erfindungsgegenstandes besteht darin, dass Mittel zur kontinuierlichen Überwachung des elektrischen Widerstandes der Reibschicht oder der Verbindungsschicht bei einer festgelegten Temperatur vorgesehen sind, deren Messwerte zur Erkennung von Alterungserscheinungen herangezogen und ggf. durch im Mikroprozessor abgelegte Daten kompensiert werden.

Schließlich sind bei einer weiteren Ausführungsform der Erfindung Mittel zur Erfassung des Verschleißes der Reibschicht vorgesehen, deren Messwerte durch im Mikroprozessor abgelegte Daten kompensiert werden.

Die Erfindung wird anhand von drei Ausführungsbeispielen in der nachfolgenden Beschreibung im Zusammenhang mit der beiliegenden Zeichnung näher erläutert, wobei für einander entsprechende Teile die gleichen Bezugszeichen verwendet werden. In der Zeichnung zeigen:
Fig. 1 eine schematische Darstellung eines Bremsbelags, der als Einrichtung zum Ermitteln der Spannkraft verwendet wird,
Fig. 2 eine vereinfachte Darstellung einer elektrischen Schaltung zur Auswertung von Änderungen des elektrischen Widerstands des in Fig. 1 dargestellten Bremsbelags,
Fig. 3 eine diagrammatische Darstellung der Abhängigkeit der Spannung, die die zu ermittelnde Spannkraft repräsentiert, vom elektrischen Widerstand der Reibschicht des gezeigten Bremsbelags,
Fig. 4 eine Schnittdarstellung einer zweiten Ausführung eines als Einrichtung zum Ermitteln der Spannkraft verwendbaren Bremsbelags, und
Fig. 5 eine dritte Ausführung eines als Einrichtung zum Ermitteln der Spannkraft verwendbaren Bremsbelags in einer Fig. 4 entsprechenden Schnittdarstellüng.

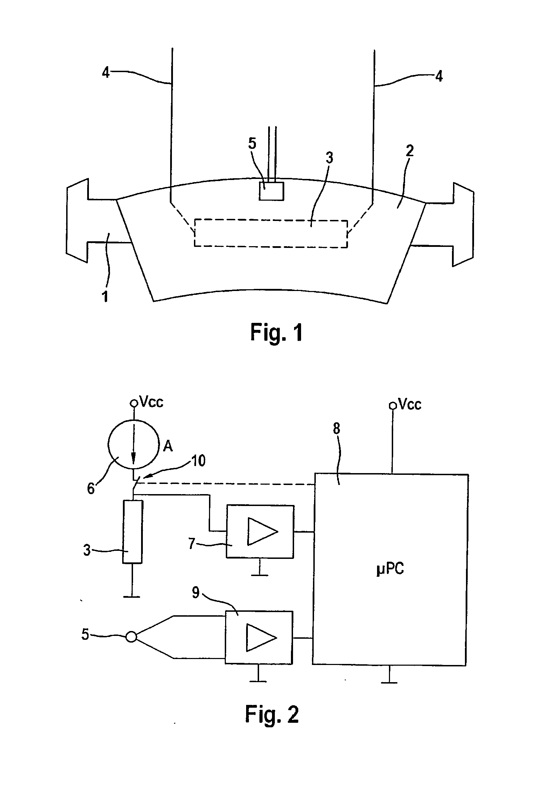

Der in Fig. 1 dargestellte Bremsbelag besteht aus einer metallischen Trägerplatte 1 sowie einem mit der Trägerplatte 1 fest, beispielsweise durch Vulkanisieren, verbundenen Reibschicht 2, deren elektrischer Widerstand gestrichelt angedeutet und mit dem Bezugszeichen 3 versehen ist. In die Reibschicht 2 sind zwei elektrische Leitungen 4 eingelassen, die der Kontaktierung der Reibschicht 2 dienen. Außerdem ist ein Thermoelement 5 vorgesehen, das eine Information über die Temperatur der Reibschicht 2 liefert. Wenn sich der elektrische Widerstand der Reibschicht 2 nur geringfügig ändert, ist das Thermoelement 5 nicht notwendig.

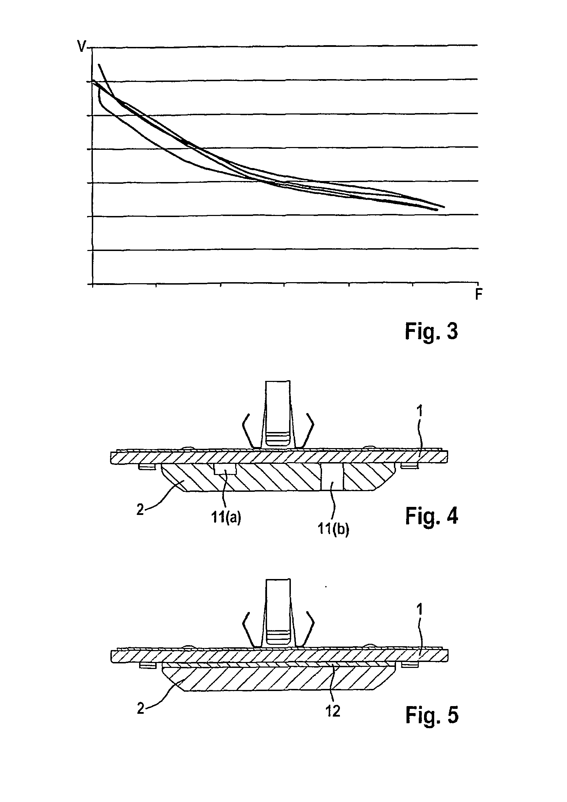

Die in Fig. 2 dargestellte Auswerteschaltung weist eine Konstantstromquelle 6 auf, durch die die Reibschicht 2 gespeist wird. Die Reibschicht 2 bzw. 3 ist einerseits an Masse und andererseits an eine elektrische Aufbereitungsschaltung 7, ggf. einen Verstärker, angeschlossen, deren Ausgang einem Mikroprozessor 8 zugeführt wird. Das im Zusammenhang mit Fig. 1 erwähnte Thermoelement 5 ist an eine zweite Aufbereitungsschaltung 9 bzw. einen Verstärker angeschlossen, dessen Ausgang ebenfalls dem Mikroprozessor 8 zugeführt wird. Im Mikroprozessor 8 wird das Ausgangssignal der ersten Aufbereitungsschaltung 7, das der Spannungsänderung entspricht, die durch die Wirkung einer auf die Reibschicht 2 wirkenden Kraft hervorgerufen wird, mit dem Ausgangssignal der zweiten Aufbereitungsschaltung 9 abgeglichen, wobei das Ergebnis ein genauer, temperaturkompensierter Wert der auf die Reibschicht 2 wirkenden Kraft bzw. der zu ermittelnden Spannkraft ist. Die Abhängigkeit der vom Mikroprozessor 8 ermittelten Spannung V von der Spannkraft F ist in Fig. 3 diagrammatisch dargestellt. Da bei den geringen Widerständen herkömmlicher Reibschichten relativ hohe Ströme fließen, wird die Konstantstromquelle 6 vom Mikroprozessor 8 getaktet, um den Energiebedarf zu verringern. Zu diesem Zweck ist zwischen der Konstantstromquelle 6 und der Reibschicht 2 bzw. 3 ein vom Mikroprozessor ansteuerbarer Schalter 10 vorgesehen.

Bei der in Fig. 4 gezeigten nicht erfindungsgemäßen Ausführung ist die Einrichtung zum Ermitteln der Spannkraft durch ein in der Reibschicht 2 integriertes kraftsensierendes Element 11 gebildet, das in der linken Hälfte der bildlichen Darstellung als nicht abrasives Element und in der rechten Hälfte der bildlichen Darstellung als abrasives Element ausgebildet ist. Eine nicht dargestellte Ausführungsvariante sieht vor, dass ein kraftsensierendes Element in der Trägerplatte integriert ist. Die kraftsensierenden Elemente können entweder bei der Herstellung des Bremsbelags oder nachträglich eingebaut werden.

Bei der in Fig. 5 gezeigten erfindungsgemäßen Ausführung wird die Spannkraft durch Messen der Änderungen des elektrischen Widerstands einer zwischen der Trägerplatte 1 und der Reibschicht 2 vorgesehenen Verbindungsschicht 12 ermittelt. Es ist jedoch auch denkbar, eine Verbindungsschicht aus piezoelektrischem Material vorzusehen.

## Patentansprüche

1. Kraftfahrzeugbremse mit mindestens einer Bremsscheibe oder mindestens einer Bremstrommel, mit mindestens zwei Bremsbelägen sowie mit einer Einrichtung zum Ermitteln einer bei der Betätigung der Kraftfahrzeugbremse auf die Bremsbeläge einwirkenden Spannkraft, wobei die Bremsbeläge eine Trägerplatte (1) sowie eine mit der Bremsscheibe oder der Bremstrommel in Eingriff bringbare Reibschicht (2) aufweisen, **dadurch gekennzeichnet, dass** die Einrichtung zum Ermitteln der Spannkraft derart ausgebildet ist, dass sie bei der Betätigung der Kraftfahrzeugbremse auftretende Änderungen des elektrischen Widerstandes (3) der Reibschicht (2) oder einer zwischen Trägerplatte (1) und Reibschicht (2) angeordneten Verbindungsschicht (12) erfasst und zur Bestimmung der Spannkraft auswertet.

2. Kraftfahrzeugbremse nach Anspruch 1 **dadurch gekennzeichnet, dass** die ermittelten Widerstandswerte mit einem gemessenen bzw. errechneten Temperaturwert abgeglichen werden, der von einem temperaturmessenden Element (5) zur Ermittlung der Temperatur der Reibschicht (2) oder der Verbindungsschicht (12) geliefert wird.

3. Kraftfahrzeugbremse nach Anspruch 2 **dadurch gekennzeichnet, dass** die Reibschicht (2) oder die Verbindungsschicht (12) an eine elektrische Aufbereitungsschaltung (7) angeschlossen ist, deren Ausgangssignal zusammen mit dem den Temperaturwert repräsentierenden Ausgangssignal zur Auswertung einem Mikroprozessor (8) zugeführt wird.

4. Kraftfahrzeugbremse nach einem der vorhergehenden Ansprüche **dadurch gekennzeichnet, dass** Mittel zur kontinuierlichen Überwachung des elektrischen Widerstandes der Reibschicht oder der Verbindungsschicht bei einer festgelegten Temperatur vorgesehen sind, deren Messwerte zur Erkennung von Alterungserscheinungen herangezogen und ggf. durch im Mikroprozessor abgelegte Daten kompensiert werden.

5. Kraftfahrzeugbremse nach einem der vorhergehenden Ansprüche **dadurch gekennzeichnet, dass** Mittel zur Erfassung des Verschleißes der Reibschicht vorgesehen sind, deren Messwerte durch im Mikroprozessor abgelegte Daten kompensiert werden.

## Claims

1. Motor vehicle brake system having at least one brake disk or at least one brake drum, having at least two brake linings and having a device for determining an application force which acts on the brake linings when the motor vehicle brake system is activated, wherein the brake linings have a carrier plate (1) and a friction layer (2) which can be engaged with the brake disk or the brake drum, **characterized in that** the device for determining the application force is embodied in such a way that it senses changes in the electrical resistance (3) of the friction layer (2) or of a connecting layer (12) arranged between the carrier plate (1) and the friction layer (2), which occur when the motor vehicle brake system is activated, and evaluates said changes for the determination of the application force.

2. Motor vehicle brake system according to Claim 1, **characterized in that** the resistance values which are determined are compared with a measured or calculated temperature value which is supplied by a temperature-measurement element (5) in order to determine the temperature of the friction layer (2) or of the connecting layer (12).

3. Motor vehicle brake system according to Claim 2, **characterized in that** the friction layer (2) or the connecting layer (12) is connected to an electric conditioning circuit (7) whose output signal is fed, together with the output signal representing the temperature value, to a microprocessor (8) for evaluation.

4. Motor vehicle brake system according to one of the preceding claims, **characterized in that** means for continuously monitoring the electrical resistance of the friction layer or of the connecting layer are provided at a defined temperature, the measured values of which means are used to detect ageing phenomena and are, if appropriate, compensated by data stored in the microprocessor.

5. Motor vehicle brake system according to one of the preceding claims, **characterized in that** means for sensing the wear of the friction layer are provided, the measured values of which means are compensated by data stored in the microprocessor.

## Revendications

1. Frein pour véhicule automobile, présentant au moins un disque de frein ou au moins un tambour de frein, au moins deux garnitures de frein ainsi qu'un dispositif permettant de déterminer la force de serrage qui agit sur les garnitures de frein lorsque les freins du véhicule automobile sont actionnés,
les garnitures de frein présentant une plaque de support (1) ainsi qu'une couche de friction (2) qui peut être engagée sur le disque de frein ou le tambour de frein,
**caractérisé en ce que**
le dispositif de détermination de la force de serrage est configuré de telle sorte que lorsque les freins du véhicule automobile sont actionnés, les modifications de la résistance électrique (3) de la couche de friction (2) ou d'une couche de liaison (12) disposée entre la plaque de support (1) et la couche de friction (2) sont détectées et évaluées pour déterminer la force de serrage.

2. Frein pour véhicule automobile selon la revendication 1, **caractérisé en ce que** les valeurs déterminées pour la résistance sont compensées par une valeur de température mesurée ou calculée qui est délivrée par un élément (5) de mesure de température en vue de déterminer la température de la couche de friction (2) ou de la couche de liaison (12).

3. Frein pour véhicule automobile selon la revendication 2, **caractérisé en ce que** la couche de friction (2) ou la couche de liaison (12) sont raccordées à un circuit électrique (7) de traitement dont le signal de sortie est apporté avec le signal de sortie qui représente la valeur de température à un microprocesseur (8) en vue de leur évaluation.

4. Frein pour véhicule automobile selon l'une des revendications précédentes, **caractérisé en ce qu'**il présente des moyens de surveillance permanente de la résistance électrique de la couche de friction ou de la couche de liaison pour une température définie, moyens dont les valeurs de mesure sont utilisées pour détecter des phénomènes de vieillissement et éventuellement sont compensées par des données conservées dans le microprocesseur.

5. Frein pour véhicule automobile selon l'une des revendications précédentes, **caractérisé en ce qu'**il présente des moyens de détection de l'usure de la couche de friction dont les valeurs de mesure sont compensées par des données conservées dans le microprocesseur.
